(19) Europäisches Patentamt
European Patent Office
Office européen des brevets

(11) **EP 2 861 317 B1**

(12) **FASCICULE DE BREVET EUROPEEN**

(45) Date de publication et mention
de la délivrance du brevet:
**05.04.2017 Bulletin 2017/14**

(51) Int Cl.:
*B01D 17/00* (2006.01)    *B01D 21/00* (2006.01)
*B01J 8/00* (2006.01)    *B01J 23/75* (2006.01)
*C10G 2/00* (2006.01)

(21) Numéro de dépôt: **13720990.4**

(22) Date de dépôt: **10.04.2013**

(86) Numéro de dépôt international:
**PCT/FR2013/050774**

(87) Numéro de publication internationale:
**WO 2013/190191 (27.12.2013 Gazette 2013/52)**

(54) **PROCÉDÉ DE SYNTHÈSE D'HYDROCARBURES À PARTIR DE GAZ DE SYNTHÈSE AVEC CONTRÔLE DE LA TEMPÉRATURE DE LA BOUCLE EXTERNE**

VERFAHREN ZUR SYNTHESE VON KOHLENWASSERSTOFFEN AUS SYNTHESEGAS MIT TEMPERATURREGELUNG MIT ÄUSSEREM REGELKREIS

METHOD FOR SYNTHESISING HYDROCARBONS FROM SYNTHESIS GAS INCLUDING OUTER LOOP TEMPERATURE CONTROL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2012 FR 1201731**

(43) Date de publication de la demande:
**22.04.2015 Bulletin 2015/17**

(73) Titulaires:
• **IFP Énergies nouvelles**
**92852 Rueil-Malmaison Cedex (FR)**
• **ENI S.p.A.**
**00144 Roma (IT)**

(72) Inventeurs:
• **HERAUD, Jean-Philippe**
**F-69780 Saint Pierre De Chandieu (FR)**
• **VIGUIE, Jean-Christophe**
**F-69006 Lyon (FR)**
• **BOUCHER, Sébastien**
**F-78400 Chatou (FR)**
• **DELLA TORRE, Chiara**
**I-20161 Milano (IT)**
• **MIGNONE, Elsa**
**I-20900 Monza (IT)**

(56) Documents cités:
**WO-A2-2009/086924    FR-A1- 2 802 828**
**FR-A1- 2 908 421    FR-A1- 2 926 084**

**Description**

La présente invention concerne le domaine de la synthèse d'hydrocarbures à partir d'une charge comprenant du monoxyde de carbone (CO), de l'hydrogène ($H_2$) et éventuellement du dioxyde de carbone ($CO_2$) appelée par la suite gaz de synthèse.

Le procédé selon l'invention permet d'optimiser le fonctionnement d'une unité de synthèse d'hydrocarbures à partir de gaz de synthèse (également appelée synthèse Fischer-Tropsch), en vue de maximiser le rendement en hydrocarbures $C_5^+$ (hydrocarbures comprenant 5 atomes de carbones et plus).

## ART ANTÉRIEUR

La réaction de synthèse Fischer-Tropsch, est connue depuis le début du XX$^{ème}$ siècle. Cette synthèse produit principalement des alcanes, et de façon plus minoritaire des alcènes et des alcools, avec une distribution en longueur de chaîne des hydrocarbures très large (de $C_1$ à plus de $C_{90}$). Le sous-produit majoritaire est l'eau, qui doit être traitée du fait de sa teneur en hydrocarbures et oxygénés. Des unités ont été opérées en Allemagne pendant la seconde guerre mondiale, puis en Afrique du Sud afin de produire des carburants synthétiques.

Le gaz de synthèse est généralement produit à partir de gaz naturel par réformage autotherme, ou vaporéformage. D'autres sources peuvent permettre de produire du gaz de synthèse, par exemple le charbon, le coke de pétrole, la biomasse, les déchets pris seuls ou en mélange adapté. Un traitement du gaz de synthèse est parfois nécessaire d'une part pour ajuster le ratio $H_2$/CO, et d'autre part pour éliminer des composés néfastes à la synthèse Fischer-Tropsch et/ou au catalyseur, tels que par exemple les composés soufrés, chlorés, les composés carbonylés métalliques.

Selon l'origine du gaz de synthèse et/ou les produits désirés, on utilise des catalyseurs dont la phase active contient du fer ou du cobalt, ainsi que des promoteurs métalliques qui accroissent la sélectivité et l'activité du catalyseur.

La synthèse Fischer-Tropsch, qui a pour caractéristique d'être extrêmement exothermique avec des enthalpies de réaction de l'ordre de -170 kJ/mol, peut être mise en oeuvre en lit fixe ou en réacteur multi-tubulaire comme décrit dans l'ouvrage "Fischer-Tropsch technology" (A.P.Steynberg and M.E.Dry, 2004), ou dans un réacteur du type colonne à bulles dans laquelle le catalyseur finement divisé est mis en suspension dans une phase liquide par la circulation de la phase gaz du bas vers le haut du réacteur, comme décrit dans les brevets US5252613, EP0820806 et EP0823470.

On appelle "slurry" le milieu constitué par les particules de catalyseur en suspension dans une phase liquide. Lesdites particules de catalyseur sont très finement divisées, typiquement avec une taille moyenne de l'ordre de 5 microns à 700 microns, et sont donc pratiquement solidaires de la phase liquide qui les contient. On appelle « cires » la partie liquide, dans les conditions d'opération de la section réactionnelle, du slurry. Un réacteur "slurry" est un réacteur triphasique contenant un slurry, ledit slurry étant traversé par un flux de bulles de gaz de taille très étalée.

Les produits légers, en phase vapeur dans les conditions d'opération de la section réactionnelle, sont séparés dans une section de séparation gaz/liquide, tandis que les composés hydrocarbonés plus lourds sont séparés du catalyseur dans une section de séparation cires/catalyseur. Cette section permet d'extraire les cires et de recycler le catalyseur dans la section réactionnelle afin de maintenir l'inventaire de catalyseur dans ladite section.

La séparation cires/catalyseur est très importante car elle doit permettre de maintenir la plus grande partie du catalyseur dans le réacteur et d'extraire le produit liquide. Une telle séparation peut être réalisée selon deux moyens :

- une séparation par filtration, les éléments filtrant étant disposés dans la partie supérieure du réacteur. Cette technologie de filtration est décrite dans de nombreux textes, par exemple US 5,527,473 ou WO 10074761.
- Une séparation mettant en oeuvre une boucle externe de séparation des cires, telle que décrite par exemple dans les brevets US 5,770,629 ou FR 2 802 828. Le brevet US 5,770,629 décrit une synthèse Fischer-Tropsch mettant en oeuvre un équipement permettant la filtration du slurry externe à la zone réactionnelle. Cet équipement comprend un média filtrant de manière à filtrer la fraction liquide. Ledit équipement permet la séparation d'une partie de la phase gaz et du solide du slurry de manière à accroître l'efficacité de la filtration et de réduire le colmatage dudit média filtrant. Le brevet FR 2 802 828 décrit une séparation des phases constituant le slurry en deux étapes, une première étape de dégazage, suivie d'une seconde étape au cours de laquelle les cires sont séparées du catalyseur, ce dernier étant recyclé dans la zone réactionnelle.

La part du coût catalyseur dans le procédé de synthèse Fischer-Tropsch est non négligeable dans le coût global du procédé (A. Brumby et al., Catal. Today, vol.106(2005), pp.166-169). Par conséquent, toute amélioration de la durée de vie du catalyseur, fonction de la stabilité du catalyseur, est primordiale.

La stabilité du catalyseur Fischer-Tropsch dépend à la fois de ses propriétés intrinsèques (par exemple caractéristiques du support, mode de préparation) et des conditions dans lesquelles il est mis en oeuvre. Il est connu que les conditions de synthèse Fischer-Tropsch sont sévères et peuvent donner lieu à une pression partielle d'eau $P_{H2O}$ assez importante ; cette $P_{H2O}$ élevée peut alors entraîner une désactivation du catalyseur Fischer-Tropsch, notamment par oxydation du cobalt métallique (phase active) lorsque ledit catalyseur est à base de cobalt (P.J. van Berge et al., Catal. Today, vol.58(2000), pp.321-334; A.M. Hilmen et al., Appl. Catal., vol.186(1999), pp.169-188).

Ainsi, la demande de brevet US 2009/0176894 prescrit une valeur de $P_{H2O}$ inférieure à 0,95 fois la limite critique $P_{H2O\ limite}$ définie par :

$$P_{H2O\ limite} = \exp(-7751/d_p.T).P_s(T)$$

où T est la température de réaction en K, $d_p$ est le diamètre moyen des pores du catalyseur en nm et $P_s(T)$ est la tension de vapeur de l'eau en bar à la température T.

Le brevet FR 2 908 421 prescrit de conserver le ratio de la pression partielle en eau sur la pression partielle en hydrogène $P_{H2O}:P_{H2}$ à une valeur strictement inférieure à 1,1. Ce ratio peut être contrôlé par les moyens suivants : augmenter le débit de gaz de synthèse, augmenter le débit de recyclage des gaz issus de la section de séparation gaz/liquide, ajuster le ratio $P_{H2}:P_{CO}$, où $P_{CO}$ représente la pression partielle en monoxyde de carbone, réduire la température, réduire la pression. Ces deux derniers moyens ayant pour inconvénient d'impacter négativement la production du procédé

Cependant, aucun de ces documents n'adresse le problème de contrôler les conditions opératoires dans la boucle externe de séparation des cires.

Aussi, les risques de désactivation du catalyseur Fischer-Tropsch et la part non négligeable du coût catalyseur dans la mise en oeuvre du procédé ont conduit la demanderesse à rechercher à améliorer les performances du catalyseur, notamment par une réduction du stress chimique du catalyseur provoqué par la présence d'eau lors de l'étape de séparation gaz/liquide/solide et, par conséquent, une réduction de la dégradation dudit catalyseur dans les conditions de ladite étape de séparation.

## OBJET ET INTÉRÊT DE L'INVENTION

La présente invention a trait à un procédé de synthèse Fischer-Tropsch, ledit procédé comprenant une boucle externe de séparation des cires, caractérisé en ce que on contrôle le rapport $P_{H2O}:P_{H2}$ dans ladite boucle par la diminution de la température dans le moyen de dégazage.

Les avantages de la présente invention résident dans le fait qu'en diminuant la température dans la boucle externe de séparation des cires, les performances du catalyseur sont stabilisées, permettant de maintenir la production en produits hydrocarbonés constante et de réduire les appoints de catalyseur au cours du temps. La combinaison de ces avantages permet d'améliorer l'économie du procédé. Ces avantages sont surprenants par rapport à l'enseignement apporté par le brevet FR2 908 421 qui enseigne qu'une baisse de la température réduit la production du procédé.

## DESCRIPTION DÉTAILLÉE DE L'INVENTION

La présente invention a pour objet un procédé de synthèse d'hydrocarbures tel que défini dans la revendication 1.

De préférence, le gaz de synthèse utilisé dans la synthèse Fischer-Tropsch présente un rapport molaire H2:CO compris entre 1:2 et 5:1, de manière plus préférée entre 1,2:2 et 3:1 et de manière plus préférée entre 1,5:1 et 2,6:1.

La synthèse Fischer-Tropsch est généralement mise en oeuvre sous une pression comprise entre 0,1 MPa et 15 MPa, de préférence comprise entre 1 MPa et 10 MPa et de manière plus préférée comprise entre 1,5 MPa et 5 MPa. La vitesse volumétrique horaire du gaz de synthèse est généralement comprise entre 100 et 20000 h$^{-1}$ (volume de gaz de synthèse par volume de catalyseur et par heure), de préférence entre 400 et 10000 h$^{-1}$.

Tout catalyseur comprenant du cobalt connu de l'homme du métier convient au procédé selon l'invention. On utilise de préférence des catalyseurs comprenant du cobalt déposé sur un support sélectionné parmi les oxydes suivants : alumine, silice, zircone, oxyde de titane, oxyde de magnésium ou leurs mélanges. Différents promoteurs connus de l'homme du métier peuvent également être ajoutés, notamment ceux sélectionnés parmi les éléments suivants : rhénium, ruthénium, molybdène, tungstène, chrome. Il est également possible d'ajouter au moins un alcalin ou alcalino-terreux à ces formulations catalytiques.

Le rapport $P_{H2O}:P_{H2}$ théorique dans ladite boucle externe est déterminé à partir des mesures du débit molaire du monoxyde de carbone $CO_{entrée}$ et de l'hydrogène $H_{2\ entrée}$ qui entre dans ladite section réactionnelle et des mesures du débit molaire du monoxyde de carbone $CO_{dégaz}$ et de l'hydrogène $H_{2\ dégaz}$ qui sortent du moyen de dégazage.

Pour ce faire, on définit la conversion du monoxyde de carbone Cv, le rapport $H_{2\ entrée}/CO_{entrée}$ de la charge R1 et le rapport d'usage Rft de la manière suivante :

$$Cv = (CO_{entrée} - CO_{dégaz}) / CO_{entrée}$$

$$R1 = H_{2\ entrée} / CO_{entrée}$$

$$Rft = (H_{2\ entrée} - H_{2\ dégaz}) / (CO_{entrée} - CO_{dégaz})$$

Le rapport $P_{H2O}$ :$P_{H2}$ théorique est alors calculé selon :

$$P_{H2O}:P_{H2}\ \text{théorique} = Cv/(R1 - Rft \times Cv)$$

De même, on détermine le ratio $P_{H2O}$:$P_{H2}$ théorique dans la zone réactionnelle en utilisant les mesures du débit molaire du monoxyde de carbone $CO_{sortie}$ et de l'hydrogène $H_{2\ sortie}$ en sortie de ladite section réactionnelle en lieu et place de $CO_{dégaz}$ et de $H_{2\ dégaz}$.

La boucle externe de séparation des cires est définie par au moins les étapes suivantes :

a) Prélèvement dans la section réactionnelle d'une fraction du volume réactionnel,
b) Séparation dans un moyen de dégazage de la fraction prélevée au cours de l'étape a) en une phase gaz et une suspension contenant le liquide et le solide,
c) Séparation de la suspension produite par l'étape b) en un produit comprenant les cires et comprenant au plus 0,1%volume de particules solides et une suspension dont la concentration en particules solide est supérieure d'au moins 5% à celle de ladite suspension produite par ladite phase b)
d) Recyclage de la suspension produite par l'étape c) dans la section réactionnelle.

Le prélèvement dans la section réactionnelle selon ladite étape a) d'une fraction du volume réactionnel est opéré dans les mêmes conditions opératoires que celles du réacteur au point de soutirage. Par conséquent, les température, pression ainsi que la composition chimique de la phase soutirée sont identiques à celles de la phase réactionnelle, lesquelles sont ajustées pour contrôler, notamment maintenir, le ratio $P_{H2O}$:$P_{H2}$ théorique à une valeur strictement inférieure à 1,1 en tout point du réacteur et ainsi opérer dans les conditions optimales de fonctionnement du catalyseur Fischer-Tropsch pour ne pas dégrader la productivité en composés hydrocarbonées. Le volume réactionnel prélevé comportant une fraction de phase catalytique et des réactifs, la réaction Fischer-Tropsch se poursuit sans contrôle dans le tube de prélèvement.

Du fait de la forte exothermicité de la réaction de synthèse, la température de la fraction prélevée s'accroît. La réaction de synthèse consommant de l'hydrogène et produisant de l'eau, $P_{H2}$ diminue et $P_{H2O}$ augmente. Par conséquent, le rapport $P_{H2O}$:$P_{H2}$ augmente au-delà de la valeur optimale, induisant des risques de dégradation accélérée du catalyseur.

Par conséquent, il est nécessaire de contrôler le rapport $P_{H2O}$:$P_{H2}$ théorique dans la boucle externe de séparation des cires. Conformément à l'invention, on contrôle ce rapport en réalisant l'étape 3) de répétition des étapes 1) à 2) jusqu'à ce qu'il soit strictement inférieur à $R_{seuil}$.

Conformément à l'invention, ladite étape 2) est réalisée par la diminution de la température dans le moyen de dégazage de la boucle externe de séparation des cires si le rapport $P_{H2O}$:$P_{H2}$ théorique déterminé à l'étape 1) a une valeur supérieure ou égale à $R_{seuil}$.

$R_{seuil}$ est compris entre 0,1 et 1,1, préférentiellement entre 0,7 et 1,1. Dans un mode préféré, $R_{seuil}$ peut prendre une valeur choisie parmi 1,1, 0,9 et 0,7. Dans un arrangement préféré, $R_{seuil}$ est égal à 1,1. Dans un autre arrangement préféré, $R_{seuil}$ est égal à 0,9. Selon une variante, $R_{seuil}$ est égal à 0,7.

La diminution de température dans le moyen de dégazage permet de limiter la conversion du CO dans la boucle externe de séparation des cires. La température dudit moyen de dégazage est ajustée en maintenant une différence de température déterminée entre la température de zone réactionnelle $T_{réac}$, laquelle est contrôlée, et celle dudit moyen de dégazage $T_{dégaz}$.

La température du moyen de dégazage est déterminée par tout moyen connu de l'homme du métier. Elle peut être mesurée en plusieurs endroits dudit moyen de dégazage, l'ensemble des mesures étant éventuellement moyenné.

Ladite différence de température $T_{réac}$-$T_{dégaz}$ est comprise entre 0 et +30°C, et plus préférentiellement entre +4 et +15°C

Ladite diminution de température peut être réalisée par tout moyen connu de l'homme du métier. Par exemple, la fraction prélevée lors de ladite étape a) peut traverser un échangeur de chaleur de manière à être refroidie. Un autre exemple est d'inclure au sein du moyen de dégazage un moyen d'évacuer la chaleur.

## Description de la figure

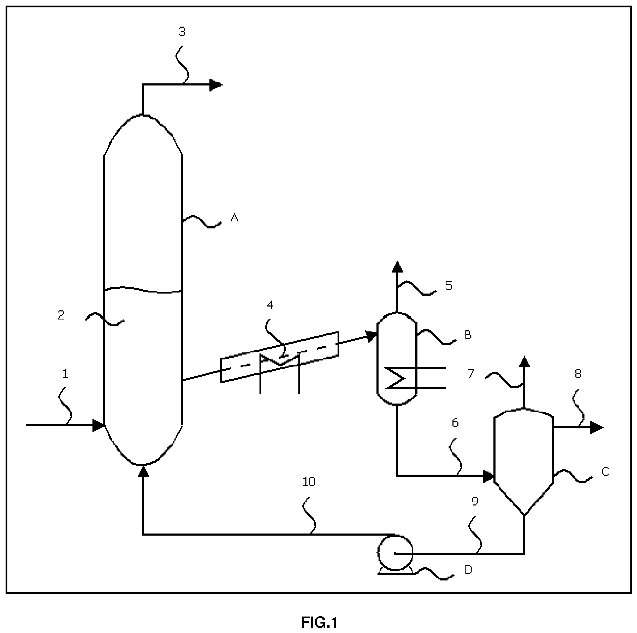

La figure 1 illustre l'invention sans en limiter la portée.

Le gaz de synthèse comprenant du monoxyde de carbone et de l'hydrogène, est amené via une conduite (1) dans la partie inférieure du réacteur Fischer-Tropsch (A) de type colonne à bulle (slurry bubble column) rempli en partie au moyen d'une coupe hydrocarbonée, de manière à maintenir un catalyseur Fischer-Tropsch en suspension, formant un slurry (2).

Le catalyseur est sous forme de petites particules de diamètre compris entre 10 et 200 $\mu$m, ce qui réduit les limitations de transfert. Le slurry (2) est mélangé en continu de manière à former une phase homogène qui permet d'avoir une température identique en tout point dudit slurry, d'avoir une faible perte de charge sur la section réactionnelle, et de pouvoir renouveler en continu l'inventaire du catalyseur par déchargement du catalyseur contenu dans la zone réactionnelle et chargement de catalyseur frais.

Le gaz formé ou n'ayant pas réagi au cours de la réaction est séparé dans la zone de désengagement située au dessus du niveau du liquide dans le réacteur Fischer-Tropsch (A), puis sort dudit réacteur par la conduite (3).

Une fraction du volume réactionnel, prélevée lors de ladite étape a), est envoyée via la conduite (4) vers un ballon de dégazage (B) afin de séparer, conformément à ladite étape b), d'une part le gaz qui est envoyé via la conduite (5) et d'autre part la suspension dégazée qui est envoyée vers le décanteur (C) via la conduite (6).

La proportion de gaz dans ladite fraction du volume réactionnel dépend strictement des conditions opératoires du réacteur (débit de charge gaz de synthèse, pression, température) et de la position du point d'extraction de ladite fraction. Ledit gaz est un mélange d'hydrocarbures légers produits par la réaction de Fischer-Tropsch ainsi que de gaz de synthèse non converti.

Le ballon de dégazage (B) permet d'éviter la formation de turbulences dans le décanteur (C) qui seraient provoquées par le désengagement du gaz en l'absence du ballon (B).

Conformément à ladite étape c), la décantation, dans le décanteur (C) fournit des cires débarrassées des particules de catalyseur via la ligne (8) extrait de la partie haute du décanteur, éventuellement un flux gazeux via la ligne (7) et une suspension plus concentrée via la ligne (9) qui est recyclée, conformément à ladite étape d), vers le réacteur Fischer-Tropsch par la ligne (10) par un moyen de pompage (D), de manière à maintenir constante la concentration en catalyseur dans la zone réactionnelle.

## EXEMPLES

**EXEMPLE 1 - Non conforme à l'invention. Dans ce premier exemple, la température de la fraction prélevée lors de l'étape a) de la boucle externe de séparation des cires n'est pas contrôlée.**

Le mélange de gaz de synthèse et de catalyseur dispersés dans la phase liquide est converti selon la réaction de synthèse Fischer-Tropsch en hydrocarbures liquides. Le mélange de gaz de synthèse, de catalyseur et de liquide est extrait selon l'étape a) de la boucle externe de séparation des cires aux conditions opératoires de la zone réactionnelle, en particulier à une température de 229°C. Cette température permet de maintenir le ratio $P_{H2O}$:$P_{H2}$ théorique dans la zone réactionnelle à une valeur inférieure à 1,1.

Au point de prélèvement du volume réactionnel, une analyse de la phase gaz montre qu'environ 17% du monoxyde de carbone contenu dans la charge a déjà été converti. La réaction Fischer-Tropsch se poursuivant dans la ligne de soutirage et dans le moyen de dégazage, la conversion du CO atteint 60 % dans le moyen de dégazage (conversion déterminée à partir de l'analyse de la phase gaz dans ledit moyen), entrainant une augmentation de la température de 4°C, passant ainsi de 229°C à 232°C. Le ratio $P_{H2O}$:$P_{H2}$ théorique dans la boucle externe de séparation des cires augmente pour atteindre une valeur de 1,6, ce qui est supérieur au ratio limite de 1,1.

Ce ratio élevé provoque une décroissance des performances catalytiques avec le temps de fonctionnement.

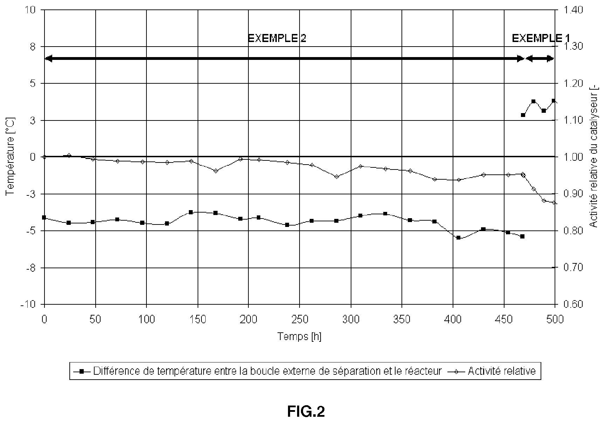

Cet effet est observé Fig.2. Après environ 470 h, on ne contrôle plus la température dans le moyen de dégazage. La réaction n'est donc plus contrôlée et l'exothermicité de la réaction provoque alors une augmentation de la température, et par conséquent de la conversion en monoxyde de carbone et du ratio $P_{H2O}$:$P_{H2}$.

Après l'arrêt du contrôle de la température, l'activité relative du catalyseur chute de 0,96 à 0,88 en 30 h. La baisse d'activité du catalyseur entraîne une perte de production en produits hydrocarbonés.

La conversion en monoxyde de carbone (CO), comprise entre 0 et 100%, est définie par :

$$X_{CO} = \frac{\left(Q_{m,CO,PtA} - Q_{m,CO,PtB}\right)}{Q_{m,CO,PtA}}$$

avec

$X_{CO}$ : Conversion en monoxyde de carbone

$Q_{m,CO,PtA}$ : débit massique de CO au point A par exemple en entrée (1) de la section réactionnelle

$Q_{m,CO,PtB}$ : débit massique de CO au point B par exemple en sortie (5) du moyen de dégazage

Les références (1) et (5) renvoyant à la figure 1.

**EXEMPLE 2 - Conforme à l'invention. Dans ce deuxième exemple, la température de la fraction prélevée lors de l'étape a) de la boucle externe de séparation des cires est maintenue à 225°C.**

Le mélange de gaz de synthèse et de catalyseur dispersé dans la phase liquide est converti selon la réaction de synthèse Fischer-Tropsch en hydrocarbures liquides. Le mélange de gaz de synthèse, de catalyseur et de liquide est extrait selon l'étape a) de la boucle externe de séparation des cires aux conditions opératoires de la zone réactionnelle, en particulier à une température de 229°C. Cette température permet de maintenir le ratio $P_{H2O}:P_{H2}$ théorique à une valeur inférieure à 1,1 dans la zone réactionnelle.

Dans cet exemple, la boucle externe de séparation des cires est refroidie en continu afin de maintenir dans le moyen de dégazage une température inférieure d'au moins 5°C par rapport à la température de la zone réactionnelle permettant de maintenir le ratio $P_{H2O}:P_{H2}$ théorique à une valeur de 0,8, inférieure à la limite de 1,1.

Au point de prélèvement du volume réactionnel, environ 17% du monoxyde de carbone contenu dans la charge a déjà été converti. Avec le contrôle de la température, la conversion se stabilise à environ 50%.

En réduisant la température de la boucle externe de séparation des cires, la cinétique de la réaction est limitée.

Dans ces conditions, les performances du catalyseur sont stables permettant de maintenir un débit de production en produits hydrocarbonés constant.

Ceci est illustré Fig.2, entre 0 et environ 470 h. La température de la boucle externe de séparation des cires est maintenue à environ 5 °C en dessous de la température du réacteur. L'activité du catalyseur est stable au cours de cette période.

**Revendications**

1. Procédé de synthèse d'hydrocarbures à partir d'une charge comprenant du gaz de synthèse, dans lequel on met en oeuvre un catalyseur solide comprenant du cobalt dans une section réactionnelle tri-phasique opérée telle que ledit catalyseur est maintenu en suspension dans une phase liquide par la circulation d'une phase gaz du bas vers le haut de ladite section réactionnelle, ledit procédé comprenant une boucle externe de séparation des cires, **caractérisé en ce que** :

   1) On détermine le rapport $P_{H2O}:P_{H2}$ théorique dans la boucle externe de séparation des cires par le calcul suivant :

$$P_{H2O}:P_{H2} \text{ théorique} = Cv/(R1 - Rft \times Cv)$$

$$Cv = (CO_{entrée} - CO_{dégaz}) / CO_{entrée}$$

$$R1 = H_{2\ entrée} / CO_{entrée}$$

$$Rft = (H_{2\ entrée} - H_{2\ dégaz}) / (CO_{entrée} - CO_{dégaz}),$$

2) Si le rapport $P_{H2O}:P_{H2}$ théorique déterminé à l'étape 1) a une valeur supérieure ou égale à $R_{seuil}$, on diminue la température dans le moyen de dégazage de la boucle externe de séparation des cires,

3) Répétition des étapes 1) à 2) jusqu'à ce que le rapport $P_{H2O}:P_{H2}$ théorique présente une valeur strictement inférieure à $R_{seuil}$, où $R_{seuil}$ est compris entre 0,1 et 1,1

dans lequel l'étape 2) est réalisée par la diminution de la température dans ledit moyen de dégazage de manière à ce que la différence de température entre la section réactionnelle et le moyen de dégazage Tréac-Tdégaz est comprise entre 0 et +30°C.

2. Procédé selon la revendication 1 dans lequel $R_{seuil}$ est égal à 1,1.

3. Procédé selon la revendication 1 dans lequel $R_{seuil}$ est égal à 0,9.

4. Procédé selon la revendication 1 dans lequel $R_{seuil}$ est égal à 0,7.

5. Procédé selon l'une quelconque des revendications précédentes dans lequel la différence de température entre la section réactionnelle et ledit moyen de dégazage $T_{réac}$-$T_{degaz}$ est comprise entre +4 et +15°C.

6. Procédé selon l'une des revendications 1 à 5 dans lequel la diminution de la température de l'étape 2) est réalisée par un échangeur de chaleur.

## Patentansprüche

1. Verfahren zur Synthese von Kohlenwasserstoffen aus einer Charge, die Synthesegas umfasst, wobei ein fester Katalysator, der Kobalt umfasst, in einem dreiphasigen Reaktionsabschnitt eingesetzt wird, der so betrieben wird, dass der Katalysator durch das Zirkulieren einer Gasphase in Aufwärtsrichtung des Reaktionsabschnittes in einer flüssigen Phase in Suspension gehalten wird, wobei das Verfahren eine externe Schleife zum Trennen der Wachse aufweist, **dadurch gekennzeichnet, dass**:

1) das theoretische Verhältnis $P_{H2O}:P_{H2}$ in der Schleife zum Trennen der Wachse durch die folgende Berechnung bestimmt wird:

$$\text{theoretisches Verhältnis } P_{H2O}:P_{H2} = Cv/(R1 - Rft \times Cv)$$

mit

$$Cv\ (CO_{Einlass} - CO_{entgast}) / CO_{Einlass}$$

$$R1 = H_{2Einlass} / CO_{Einlass}$$

$$Rft = (H_{2\ Einlass} - H_{entgast}) / (CO_{Einlass} - CO_{entgast}).$$

2) wenn das theoretische Verhältnis $P_{H2O}:P_{H2}$, das in Schritt 1) bestimmt wird, einen Wert aufweist, der höher als oder gleich $R_{Schwellenwert}$ ist, die Temperatur in dem Entgasungsmittel der externen Schleife zum Trennen der Wachse verringert wird,

3) die Schritte 1) bis 2) wiederholt werden, bis das theoretische Verhältnis $P_{H2O}{:}P_{H2}$ einen Wert aufweist, der streng unter $R_{Schwellenwert}$ liegt, wobei $R_{Schwellenwert}$ zwischen 0,1 und 1,1 beträgt,

wobei der Schritt 2) durch das Verringern der Temperatur in dem Entgasungsmittel derart durchgeführt wird, dass der Temperaturunterschied zwischen dem Reaktionsabschnitt und dem Entgasungsmittel TReak-TEntgas zwischen 0 und +30 °C liegt.

2. Verfahren nach Anspruch 1, wobei $R_{Schwellenwert}$ gleich 1,1 ist.

3. Verfahren nach Anspruch 1, wobei $R_{Schwellenwert}$ gleich 0,9 ist.

4. Verfahren nach Anspruch 1, wobei $R_{Schwellenwert}$ gleich 0,7 ist.

5. Verfahren nach einem der vorhergehenden Ansprüche, wobei der Temperaturunterschied zwischen dem Reaktionsabschnitt und dem Entgasungsmittel TReak-TEntgas zwischen +4 und +15°C liegt.

6. Verfahren nach einem der Ansprüche 1 bis 5, wobei das Verringern der Temperatur des Schrittes 2) durch einen Wärmetauscher ausgeführt wird.

## Claims

1. A process for the synthesis of hydrocarbons from a feed comprising synthesis gas, in which a solid catalyst comprising cobalt is used in a three-phase reaction section operated such that said catalyst is maintained in suspension in a liquid phase by movement of a gas phase from the bottom to the top of said reaction section, said process comprising an external loop for separating waxes, **characterized in that**:

1) the ratio $P_{H2O}{:}P_{H2}$ theoretical in the external loop for separating waxes is determined using the following calculation:

$$P_{H2O}{:}P_{H2} \text{ theoretical} = Cv/(R1 - Rft \times Cv)$$

where

$$Cv = (CO_{inlet} - CO_{degas}) / CO_{inlet}$$

$$R1 = H_{2\ inlet} / CO_{inlet}$$

$$Rft = (H_{2\ inlet} - H_{2\ degas}) / (CO_{inlet} - CO_{degas})$$

2) if the ratio $P_{H2O}{:}P_{H2}$ theoretical determined in step 1) has a value of $R_{threshold}$ or higher, the temperature in the degassing means for the external loop for separating waxes is reduced,
3) steps 1) to 2) are repeated until the ratio $P_{H2O}{:}P_{H2}$ theoretical has a value strictly less than $R_{threshold}$,

where $R_{threshold}$ is in the range 0.1 to 1.1
in which step 2) is carried out by reducing the temperature in said degassing means such that the difference in temperature between the reaction section and the degassing means, $T_{rx} - T_{degas}$, is in the range 0°C to +30°C.

2. The process according to claim 1, in which $R_{threshold}$ is equal to 1.1.

3. The process according to claim 1, in which $R_{threshold}$ is equal to 0.9.

4. The process according to claim 1, in which $R_{threshold}$ is equal to 0.7.

5. The process according to one of the preceding claims, in which the difference in temperature between the reaction section and said degassing means, $T_{rx} - T_{degas}$, is in the range +4°C to +15°C.

6. The process according to one of claims 1 to 5, in which the reduction in the temperature of step 2) is brought about by a heat exchanger.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5252613 A
- EP 0820806 A
- EP 0823470 A
- US 5527473 A
- WO 10074761 A
- US 5770629 A
- FR 2802828
- US 20090176894 A
- FR 2908421

**Littérature non-brevet citée dans la description**

- **A.P.STEYNBERG ; M.E.DRY.** *Fischer-Tropsch technology,* 2004
- **A. BRUMBY et al.** *Catal. Today,* 2005, vol. 106, 166-169
- **P.J. VAN BERGE et al.** *Catal. Today,* 2000, vol. 58, 321-334
- **A.M. HILMEN et al.** *Appl. Catal.,* 1999, vol. 186, 169-188